# EUROPÄISCHE PATENTSCHRIFT

(11) **EP 4 330 122 B1**
(45) Veröffentlichungstag und Bekanntmachung des Hinweises auf die Patenterteilung: **04.12.2024**
(21) Anmeldenummer: 22719507.0
(22) Anmeldetag: 13.04.2022
(51) Int. Cl.: B62K 5/02, B62K 13/04, B62K 15/00

(54) **FORTBEWEGUNGSMITTEL**
MEANS OF TRANSPORT
MOYEN DE TRANSPORT

(30) Priorität: 26.04.2021 DE 102021110635
(43) Veröffentlichungstag der Anmeldung: 06.03.2024
(73) Patentinhaber: STIRN, Wilhelm Michael, 74024 Heilbronn (DE)
(72) Erfinder: STIRN, Wilhelm Michael, 74024 Heilbronn (DE)
(74) Vertreter: Patentanwälte Schuster, Müller & Partner mbB
(86) Internationale Anmeldenummer: PCT/DE2022/100283
(87) Internationale Veröffentlichungsnummer: WO 2022/228608

(56) Entgegenhaltungen:
- WO-A1-2014/009143
- WO-A2-2012/011706
- DE-T2- 602004 013 295
- DE-U1- 202021 100 148
- KR-A- 20070 084 934
- US-A1- 2017 190 374
- US-A1- 2017 291 629

## Beschreibung

### Stand der Technik

Die Erfindung geht aus von einem Fortbewegungsmittel, nach der Gattung des Anspruchs 1.

Fortbewegungsmittel in unterschiedlicher Form gehören seit langem zum Stand der Technik. Die Erfindung betrifft dabei insbesondere dreirädrige Fortbewegungsmittel. Fahrräder, mit und ohne Motorisierung, sowie Motorräder sind weitverbreitet und existieren in diversen Variationen. Unter anderem finden sich unterschiedlichste Bauvarianten von Dreirädern oder sogenannten Trikes. Die Kombination unterschiedlicher Bauvarianten bietet dabei eine hohe Flexibilität. So offenbart beispielsweise die EP 2 698 309 B1 ein Dreirad bei dem in einfacher Art und Weise zwischen einem ersten Modus, in dem zwei Räder vorne und eines hinten sind, und einem zweiten Modus, in dem zwei Räder hinten und eines vorne sind, gewechselt werden kann. Die DE 10 2005 046 125 B4 offenbart ein klappbares Dreirad, welches durch unterschiedliche Module zu auf die jeweiligen Erfordernisse angepasst werden kann. Aus der Gebrauchsmusterschrift DE 20 2013 004 092 U1 ist ein Laufrad bekannt, welches von einem Zweirad auf ein Dreirad umgebaut werden kann. Nachteilig bei den vorgenannten Dreirädern ist die begrenzte Variationsmöglichkeit in der vertikalen Breite und der Spur der Dreiräder, die entweder fixiert ist oder lediglich zwischen festangestellten Breiten variiert werden kann. Aus der internationalen Patentanmeldung WO 2012/011706 A2, dem gattungsgemäßen deutschen Gebrauchsmuster DE 20 2021 100 148 U1, der Übersetzung der europäischen Patentschrift DE 60 2004 013 295 T2, der USamerikanischen Patentanmeldung US 2007/019*0374 A1 und der koreanischen Patentanmeldung KR 2007 0084934 A sind zudem klappbare Roller bekannt.

Der Erfindung liegt daher die Aufgabe zugrunde, ein die Nachteile des Standes der Technik überwindendes Fortbewegungsmittel bereitzustellen.

### Die Erfindung und ihre Vorteile

Das erfindungsgemäße Fortbewegungsmittel, mit den Merkmalen des Anspruchs 1, hat demgegenüber den Vorteil, dass bei dem erfindungsgemäßen Fortbewegungsmittel, welches mindestens eine Lenkvorrichtung, einen Rahmen, wobei der Rahmen ein erstes und ein zweites Ende und mindestens zwei Rahmenschenkeln aufweist, und mindestens drei Rädern, wobei mindestens ein Rad an einem Ende des Rahmens angeordneten ist und mindestens zwei Räder am anderen Ende des Rahmens angeordnet sind, wobei die mindestens zwei Räder jeweils an einem Rahmenschenkel angebracht sind und jedes Rad eine Nabe aufweist, aufweist, wobei die Rahmenschenkel mittels eines Gelenkes miteinander verbunden sind und zwischen den Rahmenschenkeln mindestens eine Verbindung angeordnet ist und/oder das Gelenk arretierbar ist und/oder mindestens ein Rahmenteil eine Längsrichtung aufweist und in dieser verstellbar ist, wobei das Fortbewegungsmittel mindestens einen Fußpedalantrieb und/oder mindestens einen Verbrennungsmotor zum Antrieb mindestens eines Rades aufweist, wobei denkbar wäre, dass der Fußpedalantrieb am Rad oder am Rahmen befestigt ist, beispielsweise auch als Direktantrieb, wodurch die Spurbreite des Fortbewegungsmittels an die jeweiligen Erfordernisse angepasst werden kann. So ist es in einfacher Art und Weise möglich, durch Auseinanderklappen der Rahmenschenkel zwischen einer breiten und damit stabilisierten Spur der Räder und einer engen und damit wendigen und platzsparenden Radstellung zu wechseln. Die in Längsrichtung mögliche Veränderung der Länge eines Rahmenteils erlaubt es zudem den Schwerpunkt des Fortbewegungsmittels anzupassen. Ein diesbezügliches Rahmenteil wäre bevorzugt ein Rahmenschenkel oder eine Rahmenverlängerung, die variabel in ihrer Länge, beispielsweise durch eine Teleskop-Funktion, anpassbar wären. Denkbar wäre es, dass das Fortbewegungsmittel als Fahrrad bzw. Dreirad wie auch als Kraftrad ausgestaltet ist. Ebenso denkbar wäre es, dass die Rahmenschenkel asymmetrisch angeordnet sind, so dass beispielsweise ein erster Rahmenschenkel parallel zur Laufrichtung der Räder angeordnet ist und ein zweiter Rahmenschenkel von diesem schräg absteht, wodurch der Anbau einer flexibel ergänzbaren, seitlich an einem konventionellen Fahrrad angeordneten Konstruktion, wie beispielsweise in der Art eines Sozius bei einem Motorradgespann, möglich wird. In diesem Fall würde bevorzugt eine weitere Sitzmöglichkeit zwischen dem ersten und dem zweiten Rahmenschenkel befestigt, die je nach Bedarf entfernt werden kann.

Nach einer vorteilhaften Ausgestaltung des erfindungsgemäßen Fortbewegungsmittels sind die an den Rahmenschenkeln angebrachten Räder koaxial angeordnet. Dies hat den Vorteil, dass keine Schieflagen auftreten und der Schwerpunkt idealerweise zentriert zwischen den Rädern liegt.

Nach einer zusätzlichen vorteilhaften Ausgestaltung des erfindungsgemäßen Fortbewegungsmittels sind die Naben der an den Rahmenschenkeln angebrachten Räder jeweils über ein Gelenk an einem Rahmenschenkel befestigt und mit der Verbindung gekoppelt, sodass sie stets senkrecht zu dieser angeordnet sind. Dadurch kann auch bei veränderter Spreizung der Rahmenschenkel die parallele Ausrichtung der Spur beibehalten werden. Denkbar wäre es, dass mindestens ein Ende der Verbindung als Nabe für ein an einem Rahmenschenkel angeordnetes Rad ausgebildet ist und/oder die Verbindung als Achse für die mindestens zwei an jeweils einem Rahmenschenkel angeordneten Räder ausgebildet ist und/oder zwischen der Verbindung und mindestens einer Nabe eine Kopplung ausgebildet ist und diese kraftschlüssig ist.

Nach einer zusätzlichen vorteilhaften Ausgestaltung des erfindungsgemäßen Fortbewegungsmittels ist die Verbindung austauschbar. Denkbar wäre es, dass in zusammengeklapptem Zustand der Rahmenschenkel die Verbindung zwischen diesen entnommen werden kann oder eine lange Verbindung durch eine kurze die Rahmenschenkel aneinander koppelnde Verbindung ersetzt wird.

Nach einer zusätzlichen vorteilhaften Ausgestaltung des erfindungsgemäßen Fortbewegungsmittels ist die Verbindung mehrteilig ausgebildet. Denkbar wäre es, dass mehrere Teile zusammengefügt werden, um die Verbindung zu bilden, sodass diese einzelnen an die Erfordernisse angepasst werden. Ferner wäre es denkbar, dass weitere Bauteile in die Verbindung eingebaut werden, so könnten beispielsweise Stützen oder Befestigungsmittel für Aufbauten in die Verbindung eingefügt werden.

Nach einer zusätzlichen vorteilhaften Ausgestaltung des erfindungsgemäßen Fortbewegungsmittels weist die Verbindung eine Längsrichtung auf und ist in dieser verstellbar.

Nach einer zusätzlichen vorteilhaften Ausgestaltung des erfindungsgemäßen Fortbewegungsmittels ist die Verbindung eine Teleskopstange und/oder eine Steckverbindung.

Nach einer zusätzlichen vorteilhaften Ausgestaltung des erfindungsgemäßen Fortbewegungsmittels weist das Fortbewegungsmittel mindestens einen Elektromotor zum Antrieb mindestens eines Rades auf.

Nach einer zusätzlichen vorteilhaften Ausgestaltung des erfindungsgemäßen Fortbewegungsmittels weist mindestens ein Fußpedalantrieb eine Kette, einen Riemen oder eine Kardanwelle auf.

Nach einer zusätzlichen vorteilhaften Ausgestaltung des erfindungsgemäßen Fortbewegungsmittels ist die Verbindung mit einem Kettenblattsatz einer Kettenschaltung besetzt. Denkbar wäre es, dass dieser als zusätzlicher Antrieb fungiert.

Nach einer zusätzlichen vorteilhaften Ausgestaltung des erfindungsgemäßen Fortbewegungsmittels sind zwischen den Rahmenschenkeln mindestens ein Sattel, mindestens eine Sitzbank, mindestens ein Kindersitz und/oder mindestens eine Ladeplattform anbringbar. Denkbar wäre es, dass die Ladeplattform ausklapp- und oder ausziehbar ist, beispielsweise ausgestaltet wie ein Fächer oder in Form übereinander schiebbarer Platten oder dergleichen, der bzw. die gegebenenfalls auch zumindest teilweise aus einem flexiblen Material gefertigt sind. Diesbezüglich denkbar wäre es, dass an der Ladeplattform mindestens eine Rolle lösbar oder unlösbar angeordnet ist, die wahlweise bei hoher Belastung oder dauerhaft mit dem Boden in Kontakt kommt, wobei es auch denkbar ist, dass eine Position mindestens einer Rolle höhenverstellbar ist. Denkbar wäre es, dass das Fortbewegungsmittel über mindestens ein Behältnis, beispielsweise zum Transport von Flüssigkeiten, insbesondere Wasser (z.B. Trinkwasser) verfügt, welches bevorzugt zwischen den Rahmenschenkeln angebracht wird. Ferner wäre es denkbar, dass das Fortbewegungsmittel dazu geeignet ist über einen Motor oder einen Fußpedalantrieb eine Flüssigkeit zu pumpen, die bevorzugt in mindestens ein Behältnis geleitet wird.

Nach einer zusätzlichen vorteilhaften Ausgestaltung des erfindungsgemäßen Fortbewegungsmittels ist der Rahmen entlang der Rahmenschenkel zusammenklappbar. Dadurch kann das erfindungsgemäße Fortbewegungsmittel wie ein Gattungsmäßiges Klapprad zum Transport zusammengeklappt werden.

Nach einer zusätzlichen vorteilhaften Ausgestaltung des erfindungsgemäßen Fortbewegungsmittels weist mindestens ein Rad eine Felge, wobei an der Felge ein Reifen angeordnet ist, der eine Lauffläche aufweist, und ein Bodenhaftungselement auf, wobei mindestens ein Bodenhaftungselement in zwei Positionen verbringbar ist. Denkbar wäre es, dass dabei eine Position eine aktive, eine inaktivere oder eine inaktive Position ist, zwischen denen gewechselt werden kann. Ferner wäre es denkbar, dass das Bodenhaftungselement ein Noppen, ein Stollen, ein Spike, und/oder eine Platte ist. Zudem wäre es denkbar, dass das Bodenhaftungselement klappbar oder gefedert ist.

Es wäre ebenso denkbar, dass das Bodenhaftungselement in einer aktiven Position durch den Reifen hindurch ragt und bei Verbringung in eine inaktive Position in diesem verschwindet. Ferner denkbar wäre es, dass das Bodenhaftungselement an der Felge und/oder dem Reifen angeordnet ist. Hinsichtlich des Reifens wäre es denkbar, dass dieser aus Vollgummi oder mehrteilig ausgebildet ist, so könnte in einem hohlen Gummireifen ein Luftschlauch angeordnet sein.

Nach einer diesbezüglichen vorteilhaften Ausgestaltung des erfindungsgemäßen Fortbewegungsmittels ist mindestens ein Bodenhaftungselement durch eine Steuerung steuerbar, wobei die Steuerung mindestens ein Betätigungselement und/oder einen Sensor aufweist.

Nach einer zusätzlichen vorteilhaften Ausgestaltung des erfindungsgemäßen Fortbewegungsmittels ist der Rahmen mehrteilig ausgebildet. Diesbezüglich wäre es denkbar, dass der mehrteilige Rahmen über Steckverbindungen zusammenbaubar ist. Denkbar wäre es, dass die einzelnen Bauteile des Fortbewegungsmittels als kombinierbare Module ausgestaltet sind, sodass beispielsweise unterschiedliche Sitzmöglichkeiten und/oder Antriebsmöglichkeiten frei zusammengestellt und je nach Bedarf ausgetauscht werden können.

Weitere Vorteile und vorteilhafte Ausgestaltung der Erfindung sind der nachfolgenden Beschreibung, den Ansprüchen und den Zeichnungen entnehmbar.

### Zeichnungen

Bevorzugte Ausführungsbeispiele des erfindungsgemäßen Gegenstands sind in den Zeichnungen dargestellt und werden im Folgenden näher erläutert. Es zeigen
- Fig. 1: eine Aufsicht auf eine schematische Darstellung eines erfindungsgemäßen Fortbewegungsmittels im zusammengeklappten Zustand,
- Fig. 2: eine Aufsicht auf eine schematische Darstellung eines erfindungsgemäβen Fortbewegungsmittels, gemäß Fig. 1, mit leicht gespreiztem Doppelrahmen,
- Fig. 3: eine Aufsicht auf eine schematische Darstellung eines erfindungsgemäβen Fortbewegungsmittels, gemäß Fig. 1, mit voll gespreiztem Doppelrahmen,
- Fig. 4: eine Aufsicht auf eine schematische Darstellung einer weiteren Variante eines erfindungsgemäßen Fortbewegungsmittels mit voll gespreiztem Doppelrahmen und einer einfachen Teleskopverbindung, und
- Fig. 5: eine Aufsicht auf eine schematische Darstellung einer weiteren Variante eines erfindungsgemäßen Fortbewegungsmittels mit voll gespreiztem Doppelrahmen und einer doppelten Teleskopverbindung,
- Fig. 6: eine Aufsicht auf eine schematische Darstellung einer weiteren Variante des erfindungsgemäßen Fortbewegungsmittels im zusammengeklappten Zustand,
- Fig. 7: eine Aufsicht auf eine schematische Darstellung eines erfindungsgemäβen Fortbewegungsmittels, gemäß Fig. 6, mit voll gespreiztem Doppelrahmen,
- Fig. 8: eine Aufsicht auf eine schematische Darstellung eines erfindungsgemäβen Fortbewegungsmittels, gemäß Fig. 6, mit asymmetrisch gespreiztem Doppelrahmen und
- Fig. 9: eine Aufsicht auf eine schematische Darstellung eines erfindungsgemäβen Fortbewegungsmittels, gemäß Fig. 6, mit asymmetrisch gespreiztem Doppelrahmen und verlängertem Rahmenschenkel.

### Beschreibung der Ausführungsbeispiele

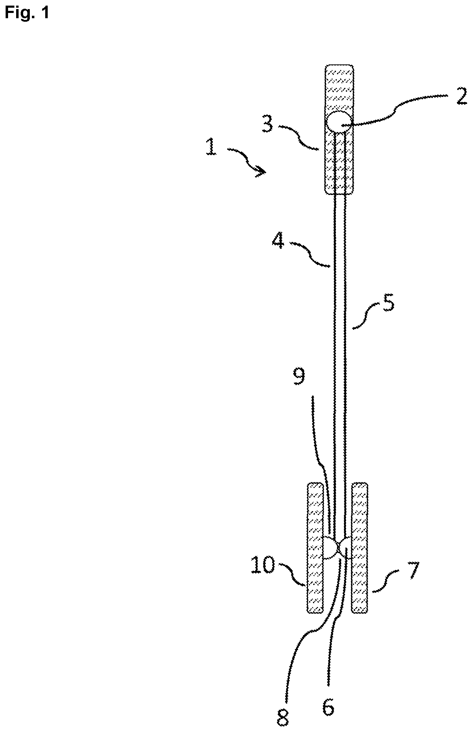

Fig. 1 zeigt eine Aufsicht auf eine schematische Darstellung eines erfindungsgemäßen Fortbewegungsmittels 1 im zusammengeklappten Zustand, bei dem ein Gelenk 2 über einem Vorderreifen 3 angeordnet ist, welches mit einem Doppelrahmen, bestehend aus einem linken Rahmenschenkel 4 und einem rechten Rahmenschenkel 5, verbunden ist. Der rechte Rahmenschenkel 5 des Doppelrahmens ist mit einem Gelenk 6 am rechten Hinterrad 7 verbunden, wobei das Gelenk 6 über eine Verbindung 8 mit einem Gelenk 9, das am linken Hinterrad 10 angebracht ist, verbunden ist und gleichzeitig das linke Hinterrad 10 mit dem linken Rahmenschenkel 4 des Doppelrahmens verbindet.

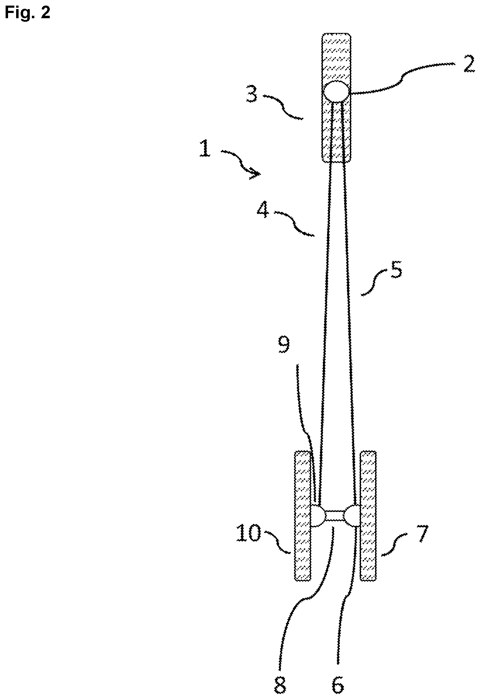

Fig. 2 zeigt eine Aufsicht auf eine schematische Darstellung eines erfindungsgemäßen Fortbewegungsmittels 1, gemäß Fig. 1, mit leicht gespreiztem Doppelrahmen, wodurch die Verbindung 8 auseinandergezogen ist.

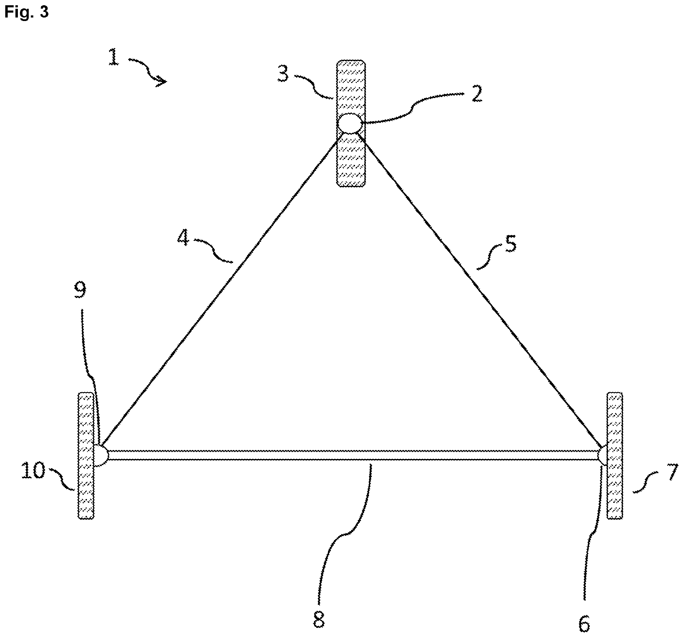

Fig. 3 zeigt eine Aufsicht auf eine schematische Darstellung eines erfindungsgemäßen Fortbewegungsmittels 1, gemäß Fig. 1, mit voll gespreiztem Doppelrahmen, wodurch die Verbindung 8 maximal auseinandergezogen ist.

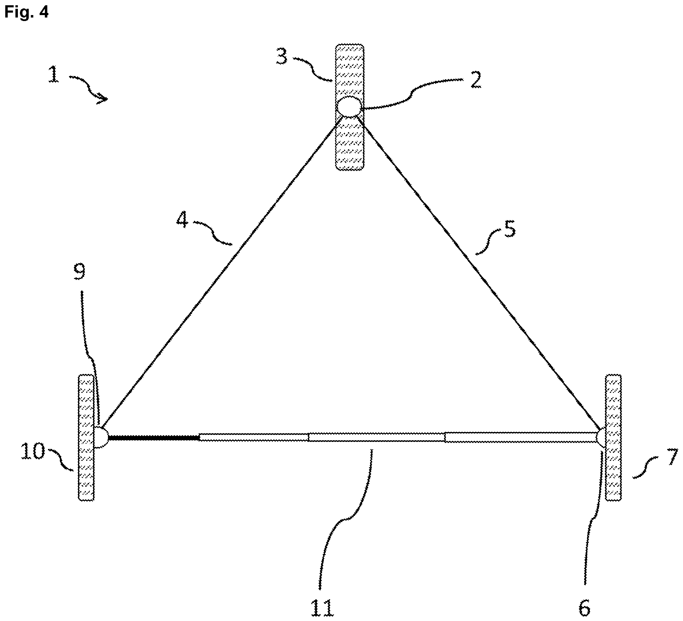

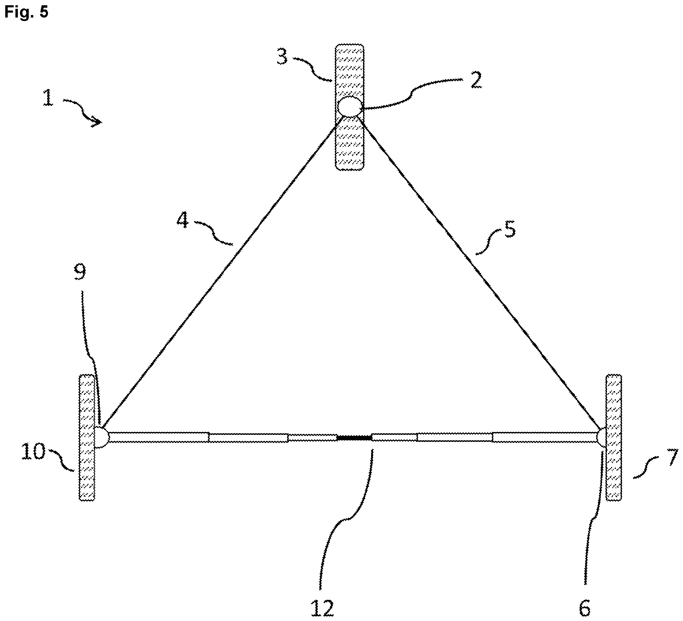

Fig. 4 zeigt eine Aufsicht auf eine schematische Darstellung einer weiteren Variante eines erfindungsgemäßen Fortbewegungsmittels mit voll gespreiztem Doppelrahmen und einer einfachen Teleskopverbindung 11 und Fig. 5 mit einer doppelten Teleskopverbindung 12.

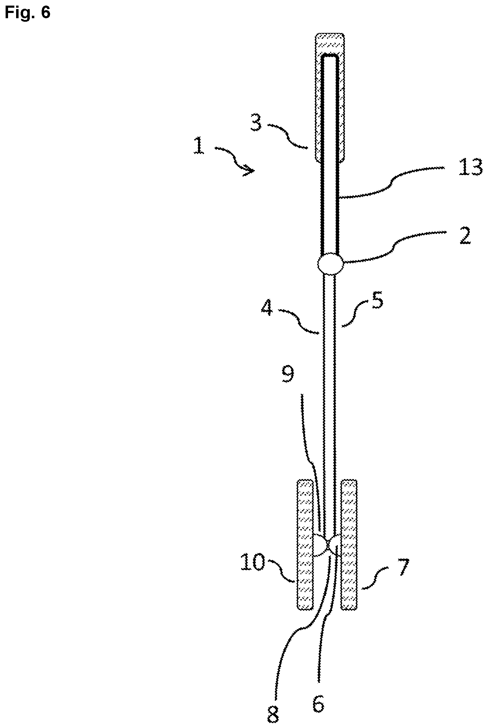

Fig. 6 zeigt eine Aufsicht auf eine schematische Darstellung einer weiteren Variante des erfindungsgemäßen Fortbewegungsmittels 1 im zusammengeklappten Zustand. Im Vergleich zum ersten Ausführungsbeispiel, Fig. 1, ist das Gelenk 2 nicht über dem Vorderreifen 3 angeordnet. Stattdessen ist das Gelenk 2 über eine Rahmenverlängerung 13 nach hinten versetzt.

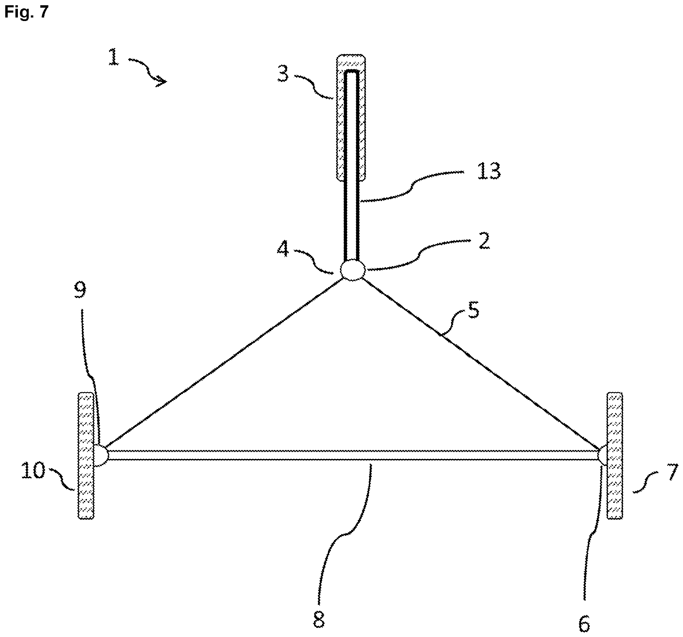

Fig. 7 zeigt eine Aufsicht auf eine schematische Darstellung eines erfindungsgemäßen Fortbewegungsmittels 1, gemäß Fig. 6, mit voll gespreiztem Doppelrahmen.

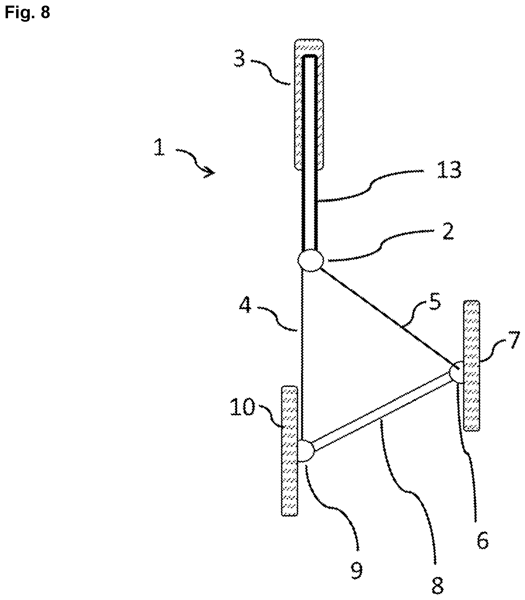

Fig. 8 zeigt eine Aufsicht auf eine schematische Darstellung eines erfindungsgemäßen Fortbewegungsmittels 1, gemäß Fig. 6, mit asymmetrisch gespreiztem Doppelrahmen.

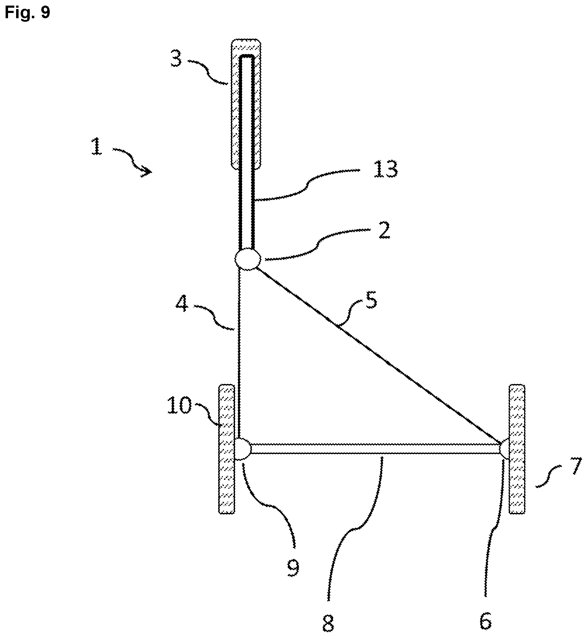

Fig. 9 zeigt eine Aufsicht auf eine schematische Darstellung eines erfindungsgemäßen Fortbewegungsmittels, gemäß Fig. 6, mit asymmetrisch gespreiztem Doppelrahmen und verlängertem Rahmenschenkel. Denkbar wäre es, dass im eingeklappten Zustand das zweite Rad keinen Bodenkontakt hat.

Denkbar wäre die Ausgestaltung des erfindungsgemäßen Fortbewegungsmittels 1 als Wechselfahrrad, sprich die Umrüstbarkeit eines erfindungsgemäßen Fortbewegungsmittels 1 auf die Benutzung durch mindestens zwei Personen, indem das Vorderteil und das Hinterteil des Fortbewegungsmittels 1 lösbar miteinander verbunden sind. Dadurch kann der Rahmen, z.B. durch Lösen der Gelenke 2, 6 und 9 auseinander gebaut werden. Das im Folgenden beschriebene Bauprinzip für ein Fortbewegungsmittel 1, das auf die Benutzung durch unterschiedliche Personenzahlen angepasst werden kann, orientiert sich am Prinzip des teilbaren Rahmens. Allerdings sind hier z.B. ein vorderes und ein hinteres Rahmenteil nicht durch Gelenke verbunden sondern beispielsweise durch Steckverbindungen, bestehend aus Bolzen und Rohr, fixiert durch eine Knebelschraube. Erweitert werden kann das erfindungsgemäße Fortbewegungsmittel 1 durch ein vorderes Sitz-Pedalmodul, welches in einer bevorzugten Variante aus einem Sattel, einem Sattelholm, einem Pedalantrieb mit Kettenblatt und mindestens je zwei horizontalen Rahmenelementen Richtung vorderem und hinterem Teil des Rahmens besteht. Ein solches Modul kann längs ein- oder mehrmals zwischen vorderem und hinterem Rahmenteil eingefügt werden. Horizontal bedeutet in diesem Zusammenhang parallel zu einer ebenen Fahrbahn. Die Rahmenelemente müssen dabei so gestaltet sein, dass sie analog zum Vorder- und Hinterteil des Rahmens über Steckverbindungen mit diesen verbunden werden können. Prinzipiell lassen sich auf diese Weise auch mehrere gleichartige Zwischenmodule zwischen Vorder- und Hinterteil des ursprünglichen Rahmens einfügen. Deren Anzahl wird durch die mechanische Stabilität der Gesamtkonstruktion begrenzt. Des Weiteren kann ein Heckmodul ergänzt werden, über welches die Übertragung des Drehmoments von den zusätzlichen Pedalantrieben auf das Hinterrad 7 und/oder 10 entweder über Kettenblätter, miteinander gekoppelt durch eine Kette, wie bei einem herkömmlichen Tandemfahrrad, oder über Zahnräder und Zahnriemen erfolgen kann. Beide Betriebsarten gewährleisten eine konstante Orientierung der Pedalantriebe zueinander. Diese Orientierung kann identisch aber auch beispielsweise unter 90° relativ zueinander gewählt werden. Beispiele dafür sind die Verbrennungsmotoren in Autos, realisiert in der V-Ausführung des Motorblocks. Auch eine Drehmomentübertragung zwischen den Pedalantrieben über eine Kardanwelle ist denkbar, aber schwer zu realisieren, da zwischen benachbarten Pedalantrieben ein Getriebe zur Umkehr der Drehrichtung zwischen beiden Enden der Kardanwelle integriert werden muss. Das oben beschriebene Zwischenmodul kann mit einem elektrischen Hilfsantrieb, beispielsweise in Form eines Mittelmotors am Pedalantrieb, ausgestattet werden. Hierbei kann zur Diebstahlsicherung das teure Akkumodul abnehmbar konstruiert sein. Somit kann es vom abgeschlossenen, abgestellten Fortbewegungsmittel 1 vom Fahrer sicher entfernt werden.

Eine weitere denkbare Variante des erfindungsgemäßen Fortbewegungsmittels 1 wäre die Ausgestaltung als Harley-Chopper-Fahrrad, gegebenenfalls auch mit zwei Pedalantrieben. In dieser Variante des Harley-Chopper-Fahrrads würde das erfindungsgemäße Fortbewegungsmittel 1 eine teleskopartig ausziehbare Lenkvorrichtung, eine zwischen Fahrbahn und Lenker auf verschiedene Winkel fixierbare Einstellung der drehbaren, justierbaren Lenkergabel, einen ausziehbaren und somit verlängerbaren, mindestens zweiteiligen Sattel aufweisen und, gegebenenfalls zwei durch ein und denselben Fahrer unabhängig benutzbare Pedalantriebe. Das in Fahrtrichtung hintere Sattelteil, kann hierbei als Befestigungsansatz für Satteltaschen, einen zusätzlichen Sitz für einen Mitfahrer oder, schräg hochgeklappt, als Rückenlehne für das erfindungsgemäße Fortbewegungsmittel 1 dienen, wodurch ein Fahrgefühl ähnlich einem Harley-Chopper-Bike mit verlängerter, schräg gestellter Lenkergabel und schräggestellter Rückenlehne vermittelt werden kann. Dieses erfindungsgemäße Fortbewegungsmittel 1 stellt somit das Mittelding zwischen einem herkömmlichen Fahrrad mit aufrechter oder nach vorne geneigter Sitzposition und einem Rücken-Liegefahrrad mit horizontaler Beinstellung beim Fahren dar. Der Antrieb des Harley-Chopper-Fahrrades ist im Prinzip aufgebaut wie der Antrieb eines Tandem-Fahrrades, wobei in dieser Betriebsart dessen jetzt vordere Pedaleinheit als Antrieb fungiert. Allerdings, im Gegensatz zum klassischen Tandemfahrrad, weist es einen verkürztem Abstand zwischen dem vorderen, im weiteren Nebenpedalantrieb, weil näher am Vorderrad positioniert, genannten, und dem Hauptpedalantrieb an gewohnter Stelle unter dem Sattelholm, auf. Die Rahmenkonstruktion besteht aus einem Doppel-Rahmen, d.h. deckungsgleichen, parallel verlaufenden Rahmenteilen. Der Abstand dieser parallelen Rahmenholme rechts und links des Sattelholmes entspricht mindestens dem Durchmesser des zentralen Sattelholms, an dem sie seitlich befestigt werden. In die Rahmenholme sind die zwei Tretlager des Hauptpedalantriebs integriert. An zwei weiteren Lagern innerhalb der Rahmenholme wird nun drehbar ein Modul befestigt, an dessen anderem Ende der zweite, der Nebenpedalantrieb, ebenfalls mit Kettenritzel angebracht wird. Somit kann über die beiden Lager innerhalb der Holme das Modul für den Nebenantrieb um die Hauptpedalachse geschwenkt werden wobei sich die Kettenlänge zwischen beiden Ritzeln auf der Pedalachse des Hauptpedalantriebs und des Nebenpedalantriebs nicht verändert. Der Nebenpedalantrieb kollidiert in horizontaler Stellung mit der in ihrer Neigung veränderbaren Vorderradgabel in steilgestellter Position. Der Hauptpedalantrieb besteht aus zwei konzentrischen Achsen. Der innere Teil dieser zweiteiligen Achse verbindet die beiden Pedale des Hauptpedalantriebs. Das Ritzel mit der Kettenverbindung zum Nebenantrieb sowie die, in aller Regel, drei Kettenblätter für den Betrieb des Hinterrades über eine Kettenschaltung bilden die zweite, die konzentrisch ausgeführte Hohlachse. Das Ritzel zur Kettenverbindung mit dem Nebenpedalantrieb und die Kettenblätter für den Hinterradantrieb sind starr miteinander verbunden. Die Konstruktion ähnelt der Welle einer verstellbaren Vielblattkreissäge. Diese Konstruktion besteht aus einer inneren Vollwelle, entsprechend der Hauptpedalachse, und einer konzentrisch dazu angebrachten Hohlwelle, die auch bei Rotation gegen die Hauptwelle verschoben werden kann und das Drehmoment auch bei voller Drehzahl auf die in ihrem Abstand verschiebbaren Sägeblätter überträgt. Das Ritzel des Nebenantriebs ist mit einer Freilauffunktion ausgestattet, sodass nur bei Bewegung der Pedale des Nebenantriebs dieses Ritzel Drehmoment auf den Hauptpedalantrieb überträgt. Wenn der Nebenpedalantrieb nicht betätigt wird, kann er in den Zwischenraum zwischen die beiden schräg nach oben zur Lagerung der Lenkgabel verlaufenden Holme des Rahmens geklappt werden. Klappt man zusätzlich die Pedale ein, so wird der Fahrer durch den Nebenpedalantrieb nicht behindert.

Zur beliebten Harley-Chopper-Bike Sitzhaltung trägt außerdem die mindestens zweigeteilte Sitzbank mit hochklappbarem und in Schräglage fixierbarem, hinterem Teilstück bei. Sie bietet die Möglichkeiten, die Sitzbank horizontal als Sitz für einen Mitfahrer zu nutzen, ebenfalls in horizontaler Ausrichtung, als Halterung für Satteltaschen anzuwenden und in Schrägstellung als Rückenlehne für die typische Haltung auf einem Harley-Chopper-Bike einzusetzen. Im Gegensatz zu sonstigen Fahrradantrieben besteht zwischen dem Hauptpedalantrieb und dem Satz von Kettenblättern zum Antrieb des Hinterrades ebenfalls eine Freilauffunktion. Damit können bei Betätigung des Nebenpedalantriebs am Hauptpedalantrieb die Pedale eingeklappt werden. Dann ruht der Hauptpedalantrieb während der Nebenpedalantrieb betätigt wird. Der Hauptpedalantrieb behindert den Fahrer somit nicht. Der Antrieb kann elektrisch unterstützt werden indem z.B. zwischen den beiden Holmen des Rahmens ein Ritzel fest mit der Hauptpedalachse verbunden wird und dieses Ritzel durch den unterstützenden Elektromotor Drehmoment aufnimmt. Als besonders effizient könnte sich ein Antrieb erweisen, bei dem die Achse des Ritzels des Antriebsmotors senkrecht zum Ritzel auf der Pedalachse angeordnet ist. Diese Antriebsart verspricht bei nur einer Stufe sehr hohe Untersetzungen, es reichen somit nur zwei Zahnräder, um die notwendige Untersetzung zwischen dem elektrischen, schnell laufenden Hilfsmotor und der Achse des Hauptpedalantriebs zu realisieren. Diese Art des Antriebs wird beispielsweise in handbetriebenen Flaschenzügen verwendet. Dieser Antrieb wird in der Regel als Schneckenantrieb bezeichnet und besteht im Abtrieb aus einem schräg verzahnten Zahnrad und im Antrieb aus einer Art Schraube, die mit ihrem Gewinde in das schräg verzahnte Zahnrad eingreift. Ein Schneckenantrieb ist in der Regel selbsthemmend, d.h. dass An- und Abtrieb nicht vertauscht werden können. Alternativ kann der Abtrieb des Schneckenantriebs auch auf der linken Pedalseite, also gegenüber den Kettenblättern des Pedalantriebs montiert werden. Der Kraftschluss zwischen Pedalachse und Hilfsantrieb erfolgt beispielsweise durch eine druckkraft-gesteuerte Reibkraftkupplung, um beim Betätigen des elektrischen Hilfsantriebs ruckartige Änderungen des übertragenen Drehmoments auf das Hinterrad zu verhindern. Der Druck auf diese Reibkupplung kann gleichzeitig über eine, z.B. pulsbreitengesteuerte Regelung, das verfügbare, vom elektrischen Drehmoment des Hilfsantriebs zur Verfügung gestellte Drehmoment, steuern. Gleichzeitig kann somit über die, beispielsweise per Hand auf einen Bowdenzug ausgeübte Zugkraft, die Drehmomentübertragung in der Reibkraftkupplung und gleichzeitig das Pulsbreiten-Verhältnis der Stromversorgung kontinuierlich gesteuert werden. Dieses Pulsbreiten-Verhältnis steuert bei Gleichstromantrieben auf einfachste Weise die mittlere Stromstärke bei vorgegebener elektrischer Spannung. Die verfügbare Leistung des elektrischen Hilfsantriebs ergibt sich aus dem Produkt von Stromstärke und mittlerer, elektrischer Spannung. Die druckkraftgesteuerte Kupplung ermöglicht eine kontinuierliche Steuerung des Kraftschlusses zwischen dem elektrischen Hilfsantrieb und dem angetriebenen Hinterrad. Diese Bauweise ermöglicht die Verwendung von kleinvolumigen, schnelllaufenden und damit kostengünstigen Elektromotoren, wie sie millionenfach in Heimwerkergeräten eingesetzt werden, als Hilfsantrieb. Und sie ermöglicht den Einsatz handelsüblicher Lithium-Ionen-Akkus unterschiedlicher Spannungsklassen, die ebenfalls millionenfach hergestellt werden. Ihre Spannung beträgt modulu 3,6 Volt, beispielsweise 10,8 Volt, entsprechend der Nennspannung von drei, in Serie geschalteten Lithium-Ionen-Zellen. Damit wird ein kostengünstiger Elektro-Zusatzantrieb konzipiert, der millionenfach bei Heimwerkermaschinen bereits eingesetzt wird.

Ebenfalls denkbar wäre es, dass das erfindungsgemäße Fortbewegungsmittel 1 zusammengeklappt werden und so in seiner Länge, beispielsweise zum platzsparenden Transport, auf etwa die halbe Länge verkürzt werden kann.

Schließlich ist es ebenfalls denkbar das erfindungsgemäße Fortbewegungsmittels 1 als ein Wasserfahrrad zur Verwendung auf dem Wasser auszugestalten. Zusätzlich montierbare Volumen-Auftriebskörper, die in Dreiradstellung des Fahrrades den notwendigen Auftrieb zur Verfügung stellen, realisieren ein schwimmfähiges Gefährt. Zusätzlich einzufügende Befestigungselemente in Form von verlängerten Steckachsen verbinden zwei auftriebgebende Volumenkörper spiegelsymmetrisch mit dem Vorderrad und zwei weitere jeweils mit der Außenseite der beiden Hinterräder. Weitere Auftriebskörper können fest mit dem Rahmen des Fahrrades verbunden werden. Die drehbar mit den Rädern verbundenen Auftriebskörper übertragen das Drehmoment aus dem Pedalantrieb auf diese Volumenkörper und sorgen somit für Vortrieb. Die fest montierten Auftriebskörper erzeugen ausschließlich Auftrieb.

Alle in der Beschreibung, den nachfolgenden Ansprüchen und den Zeichnungen dargestellten Merkmale können sowohl einzeln als auch in beliebiger Kombination miteinander erfindungswesentlich sein. Die Erfindung wird durch die beigefügten Ansprüche begrenzt.

### Bezugszahlenliste

- 1: Fortbewegungsmittel
- 2: Gelenk
- 3: Vorderreifen
- 4: Rahmenschenkel (links)
- 5: Rahmenschenkel (rechts)
- 6: Gelenk (hinten rechts)
- 7: Hinterreifen (rechts)
- 8: Verbindung
- 9: Gelenk (hinten links)
- 10: Hinterreifen (links)
- 11: einfachen Teleskopverbindung
- 12: doppelte Teleskopverbindung
- 13: Rahmenverlängerung

## Patentansprüche

1. Fortbewegungsmittel (1),
- mit mindestens einer Lenkvorrichtung,
- mit einem Rahmen, wobei der Rahmen ein erstes und ein zweites Ende und mindestens zwei Rahmenschenkeln (4, 5) aufweist,
- mit mindestens drei Rädern (3, 7, 10), wobei mindestens ein Rad (3) an einem Ende des Rahmens angeordneten ist und mindestens zwei Räder (7, 10) am anderen Ende des Rahmens angeordnet sind, wobei die mindestens zwei Räder (7, 10) jeweils an einem Rahmenschenkel (4, 5) angebracht sind und jedes Rad eine Nabe aufweist,
wobei dass die Rahmenschenkel (4, 5) mittels eines Gelenkes (2) miteinander verbunden sind und zwischen den Rahmenschenkeln (4, 5) mindestens eine Verbindung (8) angeordnet ist und/oder das Gelenk (2) arretierbar ist und/oder mindestens ein Rahmenteil eine Längsrichtung aufweist und in dieser verstellbar ist,
**dadurch gekennzeichnet,**
**dass** das Fortbewegungsmittel (1) mindestens einen Fußpedalantrieb und/oder mindestens einen Verbrennungsmotor zum Antrieb mindestens eines Rades (3, 7, 10) aufweist.

2. Fortbewegungsmittel (1), nach Anspruch 1,
**dadurch gekennzeichnet,**
**dass** die an den Rahmenschenkeln (4, 5) angebrachten Räder (7, 10) koaxial angeordnet sind.

3. Fortbewegungsmittel (1), nach Anspruch 1 oder Anspruch 2,
**dadurch gekennzeichnet,**
**dass** die Naben der an den Rahmenschenkeln (4, 5) angebrachten Räder (7, 10) jeweils über ein Gelenk (6, 9) an einem Rahmenschenkel (4, 5) befestigt und mit der Verbindung (8) gekoppelt sind, sodass sie stets senkrecht zu dieser angeordnet sind.

4. Fortbewegungsmittel (1), nach einem der vorhergehenden Ansprüche,
**dadurch gekennzeichnet,**
**dass** die Verbindung (8) austauschbar ist.

5. Fortbewegungsmitte (1)I, nach einem der vorhergehenden Ansprüche,
**dadurch gekennzeichnet,**
**dass** die Verbindung (8) mehrteilig ausgebildet ist.

6. Fortbewegungsmittel (1), nach einem der vorhergehenden Ansprüche,
**dadurch gekennzeichnet,**
**dass** die Verbindung (8) eine Längsrichtung aufweist und in dieser verstellbar ist.

7. Fortbewegungsmittel (1), nach einem der vorhergehenden Ansprüche,
**dadurch gekennzeichnet,**
**dass** die Verbindung (8) eine Teleskopstange (11) und/oder eine Steckverbindung ist.

8. Fortbewegungsmittel (1), nach einem der vorhergehenden Ansprüche,
**dadurch gekennzeichnet,**
**dass** das Fortbewegungsmittel (1) mindestens einen Elektromotor zum Antrieb mindestens eines Rades (3, 7, 10) aufweist.

9. Fortbewegungsmittel (1), nach einem der vorhergehenden Ansprüche,
**dadurch gekennzeichnet,**
**dass** mindestens ein Fußpedalantrieb eine Kette, einen Riemen oder eine Kardanwelle aufweist.

10. Fortbewegungsmittel (1), nach einem der vorhergehenden Ansprüche,
**dadurch gekennzeichnet,**
**dass** die Verbindung (8) mit einem Kettenblattsatz einer Kettenschaltung besetzt ist.

11. Fortbewegungsmittel (1), nach einem der vorhergehenden Ansprüche,
**dadurch gekennzeichnet,**
**dass** zwischen den Rahmenschenkeln (4, 5) mindestens ein Sattel, mindestens eine Sitzbank, mindestens ein Kindersitz und/oder mindestens eine Ladeplattform anbringbar sind.

12. Fortbewegungsmittel (1), nach einem der vorhergehenden Ansprüche,
**dadurch gekennzeichnet,**
**dass** der Rahmen entlang der Rahmenschenkel (4, 5) zusammenklappbar ist.

13. Fortbewegungsmittel (1), nach einem der vorhergehenden Ansprüche,
**dadurch gekennzeichnet,**
**dass** mindestens ein Rad (3, 7, 10) eine Felge aufweist, wobei an der Felge ein Reifen angeordnet ist, der eine Lauffläche aufweist, und ein Bodenhaftungselement aufweist, wobei mindestens ein Bodenhaftungselement in zwei Positionen verbringbar ist.

14. Fortbewegungsmittel (1), nach Anspruch 13,
**dadurch gekennzeichnet,**
**dass** mindestens ein Bodenhaftungselement durch eine Steuerung steuerbar ist, wobei die Steuerung mindestens ein Betätigungselement und/oder einen Sensor aufweist.

15. Fortbewegungsmittel (1), nach einem der vorhergehenden Ansprüche,
**dadurch gekennzeichnet,**
**dass** der Rahmen mehrteilig ausgebildet ist.

## Claims

1. A means of locomotion (1),
- having at least one steering device,
- having a frame, wherein said frame has a first end and a second end and at least two frame legs (4, 5),
- having at least three wheels (3, 7, 10), wherein at least one wheel (3) is arranged on one end of the frame and at least two wheels (7, 10) are arranged on the other end of the frame, said at least two wheels (7, 10) being arranged each on one frame leg (4, 5), respectively, and wherein each wheel has a hub,
wherein the frame legs (4, 5) are interconnected by means of a joint (2) and at least one connection (8) is arranged between the frame legs (4, 5), and/or wherein the joint (2) may be blocked and/or wherein at least a part of the frame has a longitudinal direction and may be adjusted in said direction,
**characterised in that**
the means of locomotion (1) has at least one foot pedal actuated drive mechanism and/or at least one internal combustion engine for driving at least one wheel (3, 7, 10).

2. The means of locomotion (1) as claimed in claim 1,
**characterised in that**
the wheels (7, 10) that are fastened to the frame legs (4, 5) are arranged coaxially.

3. The means of locomotion (1) as claimed in claim 1 or claim 2,
**characterised in that**
the hubs of the wheels (7, 10) fastened to the frame legs (4, 5) are each attached to one frame leg (4, 5) via a joint (6, 9) and are coupled to the connection (8) in such a manner as to be vertically arranged with respect to the latter.

4. The means of locomotion (1) as claimed in any of the preceding claims, **characterised in that**
the connection (8) is exchangeable.

5. The means of locomotion (1) as claimed in any of the preceding claims, **characterised in that**
the connection (8) is formed of several parts.

6. The means of locomotion (1) as claimed in any of the preceding claims, **characterised in that**
the connection (8) has a longitudinal direction and may be adjusted in said direction.

7. The means of locomotion (1) as claimed in any of the preceding claims, **characterised in that**
the connection (8) is a telescopic rod (11) and/or a plug-in connection.

8. The means of locomotion (1) as claimed in any of the preceding claims, **characterised in that**
the means of locomotion (1) has at least one internal electric motor for driving at least one wheel (3, 7, 10).

9. The means of locomotion (1) as claimed in any of the preceding claims, **characterised in that**
at least one foot pedal actuated drive mechanism has a chain, a belt, or a Cardan shaft.

10. The means of locomotion (1) as claimed in any of the preceding claims, **characterised in that**
the connection (8) is equipped with a set of chain rings of a derailleur gear.

11. The means of locomotion (1) as claimed in any of the preceding claims, **characterised in that**
at least one saddle, at least one seat bench, at least one child seat and/or at least one loading platform may be arranged between the frame legs (4, 5).

12. The means of locomotion (1) as claimed in any of the preceding claims, **characterised in that**
the frame is foldable along the frame legs (4, 5).

13. The means of locomotion (1) as claimed in any of the preceding claims,
**characterised in that**
at least one wheel (3, 7, 10) has a rim, said rim having a tyre arranged thereon which has a running face and has a road adherence element, with at least one road adherence element being movable into two positions.

14. The means of locomotion (1) as claimed in claim 13,
**characterised in that**
the at least one road adherence element may be controlled by a control device, said control device having at least one actuating element and/or at least one sensor.

15. The means of locomotion (1) as claimed in any of the preceding claims, **characterised in that**
the frame is formed of several parts.

## Revendications

1. Moyen de locomotion (1),
- pourvu d'au moins un dispositif de pilotage,
- pourvu d'un cadre, le cadre présentant une première et une deuxième extrémité ainsi qu'au moins deux montants de cadre (4, 5),
- pourvu d'au moins trois roues (3, 7, 10), au moins une roue (3) étant disposée à une extrémité du cadre et au moins deux roues (7, 10) étant disposées à l'autre extrémité du cadre, lesdites au moins deux roues (7, 10) étant fixées respectivement à un montant de cadre (4, 5) et chaque roue présentant un moyeu,
les montants de cadre (4, 5) étant assemblés les uns aux autres au moyen d'une articulation (2), et au moins une liaison (8) étant disposée entre les montants de cadre (4, 5), et/ou l'articulation (2) pouvant être arrêtée, et/ou au moins une partie de cadre présentant une direction longitudinale et pouvant être déplacée le long de celle-ci,
**caractérisé en ce que**
ledit moyen de locomotion (1) présente au moins un entraînement actionné par l'intermédiaire de pédales et/ou au moins un moteur à combustion interne en vue d'entraîner au moins une roue (3, 7, 10).

2. Moyen de locomotion (1) selon la revendication 1,
**caractérisé en ce que**
les roues (7, 10) fixées aux montants de cadre (4, 5) sont disposées de manière coaxiale.

3. Moyen de locomotion (1) selon la revendication 1 ou selon la revendication 2, **caractérisé en ce que**
les moyeux des roues (7, 10) fixées aux montants de cadre (4, 5) sont fixés respectivement à un montant de cadre (4, 5) par l'intermédiaire d'une articulation (6, 9) et sont couplés à la liaison (8) de manière à être toujours disposés perpendiculairement à celle-ci.

4. Moyen de locomotion (1) selon l'une quelconque des revendications précédentes,
**caractérisé en ce que**
la liaison (8) est échangeable.

5. Moyen de locomotion (1) selon l'une quelconque des revendications précédentes,
**caractérisé en ce que**
la liaison (8) est réalisée en plusieurs pièces.

6. Moyen de locomotion (1) selon l'une quelconque des revendications précédentes,
**caractérisé en ce que**
la liaison (8) présente une direction longitudinale et peut être déplacée le long de celle-ci.

7. Moyen de locomotion (1) selon l'une quelconque des revendications précédentes,
**caractérisé en ce que**
la liaison (8) est une tige télescopique (11) et/ou un assemblage à emboîtement.

8. Moyen de locomotion (1) selon l'une quelconque des revendications précédentes,
**caractérisé en ce que**
ledit moyen de locomotion (1) présente au moins un moteur électrique en vue d'entraîner au moins une roue (3, 7, 10).

9. Moyen de locomotion (1) selon l'une quelconque des revendications précédentes,
**caractérisé en ce que**
au moins un entraînement actionné par l'intermédiaire de pédales présente une chaîne, une courroie ou un arbre à cardan.

10. Moyen de locomotion (1) selon l'une quelconque des revendications précédentes,
**caractérisé en ce que**
la liaison (8) est équipée d'un jeu de plateaux d'un dérailleur.

11. Moyen de locomotion (1) selon l'une quelconque des revendications précédentes,
**caractérisé en ce que**
il est possible de monter au moins une selle, au moins une banquette, au moins un siège enfant et/ou au moins un plateau de transport entre les montants de cadre (4, 5).

12. Moyen de locomotion (1) selon l'une quelconque des revendications précédentes,
**caractérisé en ce que**
le cadre peut être plié à plat le long des montants de cadre (4, 5).

13. Moyen de locomotion (1) selon l'une quelconque des revendications précédentes,
**caractérisé en ce que**
au moins une roue (3, 7, 10) présente une jante, sur la jante étant disposé un pneu qui présente une bande de roulement et un élément d'adhérence au sol, au moins un élément d'adhérence au sol pouvant être mis dans deux positions.

14. Moyen de locomotion (1) selon la revendication 13,
**caractérisé en ce que**
au moins un élément d'adhérence au sol peut être commandé par une commande, la commande présentant au moins un élément d'actionnement et/ou un capteur.

15. Moyen de locomotion (1) selon l'une quelconque des revendications précédentes,
**caractérisé en ce que**
le cadre est réalisé en plusieurs pièces.
